# EUROPEAN PATENT SPECIFICATION

(11) **EP 1 838 756 B1**
(45) Date of publication and mention of the grant of the patent: **03.12.2008**
(21) Application number: 05854942.9
(22) Date of filing: 21.12.2005
(51) Int. Cl.: C08G 63/80, C08G 63/81, C08K 3/34, C08K 3/00, C08G 63/00

(54) **POLYESTER CLAY NANOCOMPOSITES FOR BARRIER APPLICATIONS**
POLYESTER-TON-NANOKOMPOSITE FÜR BARRIEREANWENDUNGEN
NANOCOMPOSITES DE POLYESTER/ARGILE POUR APPLICATIONS DE BARRIERES

(30) Priority: 22.12.2004 US 638225 P; 02.06.2005 US 686727 P
(43) Date of publication of application: 03.10.2007
(73) Proprietor: E.I. DU PONT DE NEMOURS AND COMPANY, Wilmington, DE 19898 (US)
(72) Inventor: WILLIAMSON, David, T., Katy, TX 77494 (US); SCHLEINITZ, Henry, Max, Wilmington, Delaware 19806 (US); HAYES, Richard, Allen, Beaumont, Texas 77706 (US)
(74) Representative: Matthews, Derek Peter
(86) International application number: PCT/US2005/046305
(87) International publication number: WO 2006/069131

(56) References cited:
- WO-A-00/34376
- WO-A-99/48962
- HAYDN H. MURRAY: "Traditional and new applications for kaolin, smectite, and palygorskite: a general overview" APPLIED CLAY SCIENCE, vol. 17, 2000, pages 207-221, XP002380117

## Description

### FIELD OF THE INVENTION

The present invention is a method for reducing the permeability of gases through polyester containers and films by incorporating into the polymer from which the container or film is formed an effective amount of exfoliated sepiolite-type clay.

### TECHNICAL BACKGROUND OF THE INVENTION

Nanocomposites are polymers reinforced with nanometer sized particles, i.e., particles with a dimension on the order of 1 tq several hundred nanometers.

Polymer-layered silicate nanocomposites incorporate a layered clay mineral filler in a polymer matrix, see for exampleWO 099/48962 to Dow Chemical. Layered silicates are made up of several hundred thin platelet layers stacked into an orderly packet known as a tactoid. Each of these platelets is characterized by a large aspect ratio (diameter/thickness on the order of 100-1000). Accordingly, when the clay is dispersed homogeneously and exfoliated as individual platelets throughout the polymer matrix, dramatic increases in strength, flexural and Young's modulus, and heat distortion temperature are observed at very low filler loadings (<10% by weight) because of the large surface area contact between polymer and filler. In addition, barrier properties are greatly improved because the large surface area of the platelets greatly increases the tortuosity of the path a diffusing species must follow in permeating through the polymeric material.

Clay minerals and their industrial applications are reviewed by H. M. Murray in Applied Clay Science 17 (2000) 207-221. Two types of clay minerals are commonly used in nanocomposites: kaolin and smectite. The molecules of kaolin are arranged in two sheets or plates, one of silica and one of alumina. The most widely used smectites are sodium montmorillonite and calcium montmorillonite. Smectites are arranged in two silica sheets and one alumina sheet. The molecules of the montmorillonite clay minerals are less firmly linked together than those of the kaolin group and are thus further apart.

Nanocomposites have enjoyed increased interest since the initial development of nylon based material by Usuki et al. in 1993. (Usuki, A., et al., Journal of Materials Research, 1993.8 (5): p. 1179-1184.) Attempts to generate nanocomposites in a thermoplastic polyester matrix, however, have been only marginally successful. It is desirable to disperse and exfoliate clays in polyesters to enhance barrier properties, for example, in packaging applications. The majority of the polyester efforts focused on the development of polyesters with excellent barrier properties. These efforts focused on the use of smectites with a quaternary ammonium cation bearing an organic tail. This approach, while amenable to compounding methodologies, typically suffers because the exfoliating agent is not stable at the compounding temperatures. Furthermore, this route typically only results in the formation of tactoids or tactoid agglomerates in the polymer matrix. See, for example, WO 00/34376 to Eastman Chemical.

An alternative route to preparing nanocomposites is exfoliation through polymerization. This approach typically involves dispersing the nanofiller, usually a smectite like a montmorillonite, in one or more of the monomers and subsequently forming the polymer around the dispersion. One of the keys to successfully exfoliating the clay with this process involves selecting the proper intercalating agent. The interaction between the intercalating agent and the monomer must be sufficiently strong so that it is capable of driving the monomer into the galleries of the clay. Therefore, this process requires the use of an intercalating agent and as such introduces the same thermal stability issues described above.

Current literature typically teaches against the use of an in situ polymerization approach for the preparation of clay nanocomposites. For example, Matayabas et al. found that polymers prepared with organically modified clays did not exhibit any increase in the basal spacing of the clays after polymerization and no new basal spacings occurred during the polymerization. After transesterification, no individual platelets were identified. The formation of the individual platelets occurred during the polycondensation step of the polymerization process (J. C. Matayabas, Jr. et al, "Nanocomposite Technology For Enhancing The Gas Barrier," in Polymer Clay Nanocomposites, T.J. Pinnavia, G.W. Beall eds., Wiley: New York, (2000) 218-222).

A third route employed in the preparation of polyester-based nanocomposites is the use of another polymer such as poly(vinyl pyrrolidone) to facilitate the exfoliation of the clay into the polymer matrix. Nanocor® Inc. (Nanocor® Inc. is a wholly owned subsidiary of AMCOL International Corporation, Arlington Heights, Illinois.) and Eastman Chemical Company (Kingsport, Tennessee) have both employed this approach in the preparation of polyester-based nanocomposites for use in applications that require materials with excellent barrier properties and mechanical properties (see, e.g., U.S. Patent 5,698,624 to Nanocor® and PCT Int. Appl. WO 99/03914 to Eastman Chemical). However, this approach typically uses a solution-based process that allows the clay and polymer to interact and increase the basal spacing on the clays. The solvent is subsequently removed under vacuum, yielding an intercalated smectic clay system. The materials are then melt compounded with the desired polymer matrix (typically PET), extruded, and pelletized. This approach suffers from the requirement to use a large amount of solvent. For example, the polymer and clay represent only a small weight percent of the intercalation solution; see, e.g., Trexler Jr., J. W., Piner, R.L., Turner, S.R. and Barbee, R.B. PCT Int. Appl. WO 99/03914. Furthermore, the introduction of a polymer (e.g., poly(vinyl pyrrolidone)) at the interface between the polyester and the clay filler alters the interaction between the polyester matrix and the nanoclay filler particles.

For the reasons set forth above, there exists a need for an improved process for dispersing and exfoliating filler material in a polyester matrix in order to improve the gas barrier performance of shaped polyester articles, such as those used to contain food and beverages, in particular, poly(ethylene terephthalate) (PET) thermoplastic polyester polymers used for producing injection stretch blow molded bottles for packaging water, carbonated soft drinks and beer.

### SUMMARY OF THE INVENTION

It is an object of the present invention to provide a method for reducing gas permeability of shaped polyester articles, such articles being generally selected from containers, sheets and films. The method comprises the steps:
**a.** preparing a polyester nanocomposite by mixing an exfoliated sepiolite-type clay with at least one polyester precursor selected from the group
   (i) at least one diacid or diester and at least one diol;
   (ii) at least one polymerizable polyester monomer;
   (iii) at least one linear polyester oligomer; and
   (iv) at least one macrocyclic polyester oligomer; subsequently polymerizing the at least one polyester precursor in the presence or absence of solvent; and
**b.** forming a shaped polymeric article comprising the polyester nanocomposite so produced.

The nanocomposite contains an effective amount of exfoliated sepiolite-type clay. As used herein, "an effective amount" means that enough exfoliated sepiolite-type clay is present to cause a detectable decrease in the permeability of the article to the permeating substance of interest (e.g., oxygen). This is from 0.1 % by wt. to 20% by wt. of the polyester nanocomposite.

Polyester articles, and particularly extruded film or injection stretch blow molded polyester (e.g., PET) bottles, which contain exfoliated sepiolite-type clay, exhibit substantially reduced oxygen and carbon dioxide permeability values when measured according to ASTM D3985 and water vapor permeability values when measured according to ASTM D6701 in comparison to corresponding polyester articles which contained no exfoliated sepiolite-type clay.

### DETAILED DESCRIPTION OF THE INVENTION

In the context of this disclosure, a number of terms shall be utilized.

As used herein, the term "nanocomposite" or "polymer nanocomposite" means a polymeric material which contains particles, dispersed throughout the polymeric material, having at least one dimension in the 0.1 to 100 nm range ("nanoparticles"). The polymeric material in which the nanoparticles are dispersed is often referred to as the "polymer matrix." The term "polyester composite" refers to a nanocomposite in which the polymeric material includes at least one polyester.

As used herein, the term "sepiolite-type clay" refers to both sepiolite and attapulgite (palygorskite) clays.

The term "exfoliate" literally refers to casting off in scales, laminae, or splinters, or to spread or extend by or as if by opening out leaves. In the case of smectic clays, "exfoliation" refers to the separation of platelets from the smectic clay and dispersion of these platelets throughout the polymer matrix. As used herein, for sepiolite-type clays, which are fibrous in nature, "exfoliation" or "exfoliated" means the separation of fiber bundles or aggregates into nanometer diameter fibers which are then dispersed throughout the polymer matrix.

As used herein, "an effective amount" means that enough barrier enhancing additive is present to cause a detectable decrease in the permeability of the article to the permeating substance of interest (e.g., oxygen). This is from 0.1 % by wt. to 20% by wt. of the polyester nanocomposite.

As used herein, "an alkylene group" means -CₙH₂ₙ- where n z 1.

As used herein, "a cycloalkylene group" means a cyclic alkylene group, -CₙH₂ₙ₋ₓ-, where x represents the number of H's replaced by cyclization(s).

As used herein, "a mono- or polyoxyalkylene group" means [-(CH₂)_{y}--O--]ₙ -(CH₂)_{y} -, wherein y is an integer greater than 1 and n is an integer greater than 0.

As used herein, "an alicyclic group" means a non-aromatic hydrocarbon group containing a cyclic structure therein.

As used herein, "a divalent aromatic group" means an aromatic group with links to other parts of the macrocyclic molecule. For example, a divalent aromatic group may include a meta- or para-linked monocyclic aromatic group.

As used herein, "polyester" means a condensation polymer in which more than 50 percent of the groups connecting repeat units are ester groups. Thus polyesters may include polyesters, poly(ester-amides) and poly(ester-imides), so long as more than half of the connecting groups are ester groups. Preferably at least 70% of the connecting groups are esters, more preferably at least 90% of the connecting groups are ester, and especially preferably essentially all of the connecting groups are esters. The proportion of ester connecting groups can be estimated to a first approximation by the molar ratios of monomers used to make the polyester.

As used herein, "PET" means a polyester in which at least 80, more preferably at least 90, mole percent of the diol repeat units are from ethylene glycol and at least 80, more preferably at least 90, mole percent of the dicarboxylic acid repeat units are from terephthalic acid.

As used herein, "polyester precursor" means material which can be polymerized to a polyester, such as diacid (or diester)/diol mixtures, polymerizable polyester monomers, and polyester oligomers.

As used herein, "polymerizable polyester monomer" means a monomeric compound which polymerizes to a polymer either by itself or with other monomers (which are also present). Some examples of such compounds are hydroxyacids, such as the hydroxybenzoic acids and hydroxynaphthoic acids, and bis(2-hydroxyethyl) terephthalate.

As used herein, "oligomer" means a molecule that contains 2 or more identifiable structural repeat units of the same or different formula.

As used herein, "linear polyester oligomer" means oligomeric material, excluding macrocyclic polyester oligomers (vide infra), which by itself or in the presence of monomers can polymerize to a higher molecular weight polyester. Linear polyester oligomers include, for example, oligomers of linear polyesters and oligomers of polymerizable polyester monomers. For example, reaction of dimethyl terephthalate or terephthalic acid with ethylene glycol, when carried out to remove methyl ester or carboxylic groups, usually yields a mixture of bis(2-hydroxyethyl) terephthalate and a variety of oligomers: oligomers of bis(-2-hydroxyethyl) terephthalate, oligomers of mono(2-hydroxyethyl) terephthalate (which contain carboxyl groups), and polyester oligomers capable of being further extended. Preferably, in the practice of the present invention, such oligomers will have an average degree of polymerization (average number of monomer units) of about 20 or less, more preferably about 10 or less.

As used herein, a "macrocyclic" molecule means a cyclic molecule having at least one ring within its molecular structure that contains 8 or more atoms covalently connected to form the ring.

As used herein, "macrocyclic polyester oligomer" means a macrocyclic oligomer containing 2 or more identifiable ester functional repeat units of the same or different formula. A macrocyclic polyester oligomer typically refers to multiple molecules of one specific formula having varying ring sizes. However, a macrocyclic polyester oligomer may also include multiple molecules of different formulae having varying numbers of the same or different structural repeat units. A macrocyclic polyester oligomer may be a co-oligoester or multi-oligoester, i.e., a polyester oligomer having two or more different structural repeat units having an ester functionality within one cyclic molecule.

Where a range of numerical values is recited herein, unless otherwise stated, the range is intended to include the endpoints thereof, and all integers and fractions within the range. It is not intended that the scope of the invention be limited to the specific values recited when defining a range.

It is an object of the present invention to provide a method -for reducing gas permeability of shaped polyester articles, such articles being generally selected from containers, sheets and films. The method comprises the steps:
a. preparing a polyester nanocomposite by mixing a sepiolite-type clay with at least one polyester precursor selected from the group
   (i) at least one diacid or diester and at least one diol;
   (ii) at least one polymerizable polyester monomer;
   (iii) at least one linear polyester oligomer; and
   (iv) at least one macrocyclic polyester oligomer; subsequently polymerizing the at least one polyester precursor in the presence or absence of solvent; and
b. forming a shaped polymeric article comprising the polyester nanocomposite so produced.

### Preparing the Polyester Nanocomposite

The nanocomposite contains an effective amount of exfoliated sepiolite, exfoliated attapulgite, or a mixture of exfoliated sepiolite and exfoliated attapulgite. As used herein, "an effective amount" means that enough barrier enhancing additive is present to cause a detectable decrease in the permeability of the article to the permeating substance of interest (e.g., oxygen). This is from 0.1 % by wt. to 20% by wt. of the polyester nanocomposite.

### Sepiolite and Attapulgite

Clay minerals and their industrial applications are reviewed by H. H. Murray in Applied Clay Science 17(2000) 207-221. Two types of clay minerals are commonly used in nanocomposites: kaolin and smectite. The molecules of kaolin are arranged in two sheets or plates, one of silica and one of alumina. The most widely used smectites are sodium montmorillonite and calcium montmorillonite. Smectites are arranged in two silica sheets and one alumina sheet. The molecules of the montmorillonite clay minerals are less firmly linked together than those of the kaolin group and are thus further apart.

Sepiolite [Mg₄Si₆O₁₅(OH)₂-6(H₂O)] is a hydrated magnesium silicate filler that exhibits a high aspect ratio due to its fibrous structure. Unique among the silicates, sepiolite is composed of long lath-like crystallites in which the silica chains run parallel to the axis of the fiber. The material has been shown to consist of two forms, an α and a β form. The α form is known to be long bundles of fibers and the β form is present as amorphous aggregates.

Attapulgite (also known as palygorskite) is almost structurally and chemically identical to sepiolite except that attapulgite has a slightly smaller unit cell. As used herein, the term "sepiolite-type clay" includes attapulgite as well as sepiolite itself.

Sepiolite-type clays are layered fibrous materials in which each layer is made up of two sheets of tetrahedral silica units bonded to a central sheet of octahedral units containing magnesium ions (see, e.g., Figures 1 and 2 in L. Bokobza et al., Polymer International, 53, 1060-1065 (2004)). The fibers stick together to form fiber bundles, which in turn can form agglomerates. These agglomerates can be broken apart by industrial processes such as micronization or chemical modification (see, e.g., European Patent 170,299 to Tolsa, S.A.).

The amount of sepiolite-type clay used in the present invention ranges from about 0.1 to about 20 wt % based on the final composite composition. The specific amount chosen will depend' on the intended use of the nanocomposite, as is well understood in the art.

Sepiolite-type clays are available in a high purity ("rheological grade"), uncoated form (e.g., PANGEL® S9 sepiolite clay from the Tolsa Group, Madrid, Spain) or, more commonly, treated with an organic material to make the clay more "organophilic," i.e., more compatible with systems of low-to-medium polarity (e.g., PANGEL® B20 sepiolite clay from the Tolsa Group). An example of such a coating for sepiolite-type clay is a quaternary ammonium salt such as dimethylbenxylalkylammonium chloride, as disclosed in European Patent Application 221,225.

When smectic clay (e.g., a montmorillonite) is dispersed homogeneously and exfoliated as individual platelets throughout a polymer matrix, barrier properties are greatly improved because the large surface area of the platelets greatly increases the tortuosity of the path a diffusing species must follow in permeating through the polymeric material. However, sepiolite-type clay is exfoliated into long, lath-like crystallites. It is thus a highly unexpected finding that exfoliated sepiolite-type clay is effective in increasing the barrier properties of a polymer matrix into which it is incorporated.

### Polyesters

The polyester used may be any polyester with the requisite melting point. Preferably the melting point of the polyester is about 150°C or higher, and more preferably about 200°C or higher. Polyesters (which have mostly or all ester linking groups) are normally derived from one or more dicarboxylic acids and one or more diols. They can also be produced from polymerizable polyester monomers or from macrocyclic polyester oligomers.

Polyesters most suitable for use in practicing the invention comprise isotropic thermoplastic polyester homopolymers and copolymers (both block and random).

The production of polyesters from diols and hydrocarbyl diacids or esters of such diacids is well known in the art, as described by A. J. East, M. Golden, and S. Makhija in the Kirk-Othmer Encyclopedia of Chemical Technology, John Wiley & Sons, J. I. Kroschwitz exec. ed., M. Howe-Grant, ed., 4th edition (1996), vol. 19, 609-653. In the first stage, esterification or ester interchange between the diacid or its dialkyl (typically dimethyl) ester and the diol takes place to give the bis(hydroxyalkyl)ester and some oligomers along with the evolution and removal of water or alcohol (typically methanol). Because the esterification or ester-interchange is an inherently slow reaction, catalysts are commonly used. Examples of useful esterification or ester-interchange catalysts are calcium, zinc, and manganese acetates; tin compounds; and titanium alkoxides. In the second stage, polycondensation, the bis(hydroxyalkyl)ester and oligomers continue to undergo ester-interchange reactions, eliminating diol, which is removed under high vacuum, and building molecular weight. Examples of useful polycondensation catalysts include tin and titanium compounds, antimony, and germanium compounds, particularly antimony oxide (Sb₂O₃) in the case of PET.

Among suitable diacids (and their corresponding esters) are those selected from the group consisting of terephthalic acid, isophthalic acid, naphthalene dicarboxylic acids, cyclohexane dicarboxylic acids, succinic acid, glutaric acid, adipic acid, sebacic acid, 1,12-dodecane dioic acid fumaric acid, maleic acid, and the derivatives thereof, such as, for example, the dimethyl, diethyl, or dipropyl esters.

Some representative examples of glycols that can be utilized as the diol component include ethylene glycol, 1,3-propylene glycol, 1,2-propylene glycol, 2,2-diethyl-1,3-propane diol, 2,2-dimethyl-1,3-propane diol, 2-ethyl-2-butyl-1,3-propane diol, 2-ethyl-2-isobutyl-1,3-propane diol, 1,3-butane diol, 1,4-butane diol, 1,5-pentane diol, 1,6-hexane diol, 2,2,4-trimethyl-1,6-hexane diol, 1,2-cyclohexane dimethanol. 1,3-cyclohexane dimethanol, 1,4-cyclohexane dimethanol, 2,2,4,4-tetramethyl-1,3-cyclobutane diol, isosorbide, naphthalene glycols, diethylene glycol, triethylene glycol, resorcinol, hydroquinone, and longer chain diols and polyols, such as polytetramethylene ether glycol, which are the reaction products of diols or polyols with alkylene oxides.

In one preferred type of polyester the dicarboxylic acids comprise one or more of terephthalic acid, isophthalic acid and 2,6-naphthalene dicarboxylic acid, and the diol component comprises one or more of HO(CH₂)ₙOH (I), 1,4-cyclohexanedimethanol, HO(CH₂CH₂O)ₘCH₂CH₂OH (II), and HO(CH₂CH₂CH₂CH₂O)₂CH₂CH₂CH₂CH₂OH (III), wherein n is an integer of 2 to 10, m on average is 1 to 4, and z on average is about 7 to about 40. Note that (II) and (III) may be a mixture of compounds in which m and z, respectively, may vary and hence since m and z are averages, they do not have to be integers. In preferred polyesters, n is 2, 3 or 4, and/or m is 1.

Polyesters can also be produced directly from polymerizable polyester monomers. Some representative examples of suitable polymerizable polyester monomers for use in the present invention include hydroxyacids such as hydroxybenzoic acids, hydroxynaphthoic acids and lactic acid; bis(2-hydroxyethyl) terephthalate, bis(4-hydroxybutyl) terephthalate, bis(2-hydroxyethyl)naphthalenedioate, bis(2-hydroxyethyl)isophthalate, bis[2-(2-hydroxyethoxy)ethyl]terephthalate, bis[2-(2-hydroxyethoxy)ethyl]isophthalate, bis[(4-hydroxymethylcyclohexyl)methyl]terephthalate, and bis[(4-hydroxymethylcyclohexyl)methyl]isophthalate, mono(2-hydroxyethyl)terephthalate, bis(2-hydroxyethyl)sulfoisophthalate, and lactide.

Polyesters can also be produced directly from macrocyclic polyester oligomers. Macrocyclic polyester oligomers that may be employed in this invention include, but are not limited to, macrocyclic poly(alkylene dicarboxylate) oligomers having a structural repeat unit of the formula: 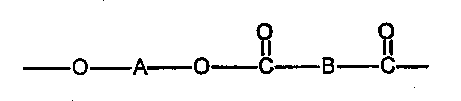 wherein A is an alkylene group containing at least two carbon atoms, a cycloalkylene, or a mono- or polyoxyalkylene group; and B is a divalent aromatic or alicyclic group. They may be prepared in a variety of ways, such as those described in U.S. Pat. Nos. 5,039,783, 5,231,161, 5,407,984, 5,668,186, United States Provisional Patent Application No. 60/626187, PCT Patent Applications WO 2003093491 and WO 2002068496, and A. Lavalette, et al., Biomacromolecules, vol. 3, p. 225-228 (2002). Macrocyclic polyester oligomers can also be obtained through extraction from low-molecular weight linear polyester.

Preferred macrocyclic polyester oligomers are macrocyclic polyester oligomers of 1,4-butylene terephthalate (CBT); 1,3-propylene terephthalate (CPT); 1,4-cyclohexylenedimethylene terephthalate (CCT); ethylene terephthalate (CET); 1,2-ethylene 2,6-naphthalenedicarboxylate (CEN); the cyclic ester dimer of terephthalic acid and diethylene glycol (CPEOT); and macrocyclic co-oligoesters comprising two or more of the above structural repeat units.

The polyesters may be branched or unbranched, and may be homopolymers or copolymers or polymeric blends comprising at least one such homopolymer or copolymer.

Specific preferred polyesters include poly(ethylene terephthalate) (PET), poly(1,3-propylene terephthalate) (PPT), poly(1,4-butylene terephthalate) (PBT), a thermoplastic elastomeric polyester having poly(1,4-butylene terephthalate) and poly(tetramethylene ether)glycol blocks (available as HYTREL® from E. I. du Pont de Nemours & Co., Inc., Wilmington, DE 19898 USA), poly(1,4-cylohexyldimethylene terephthalate) (PCT), and polylactic acid (PLA). PET is especially preferred.

Particularly notable are "modified polyesters" which are defined as being modified with up to 10% by weight of a comonomer. Unless indicated otherwise, by the term polyester polymer (or oligomer) is meant modified and unmodified polyester polymers (or oligomers). Similarly, by the mention of a particular polyester, for example, poly(ethylene terephthalate) (PET), is meant unmodified or modified PET. Comonomers can include diethylene glycol (DEG), triethylene glycol, 1,4-cyclohexane dimethanol, isosorbide, isophthalic acid (IPA), 2,6-naphthalene dicarboxylic acid, adipic acid and mixtures thereof. Typically preferred comonomers for PET include 0-5% by weight IPA and 0-3% by weight DEG.

In a particularly preferred embodiment of the invention, the polyester base polymer is polyethylene terephthalate (PET), which includes PET polymer which has been modified with from about 2 mole % up to about 5 mole % of isophthalate units. Such modified PET is known as "bottle grade" resin and is available commercially as MELINAR® LASER+® polyethylene terephthalate brand resin from ADVANSA, a wholly owned company of Haci Omer Sabanci AS of Turkey.

### Process Conditions

Process conditions for making the nanocomposite material are the same as those known in the art for manufacturing polyesters in a melt or solution process. The sepiolite clay mineral can be added by any means known in the art at any convenient stage of manufacture before the polyester degree of polymerization is about 20. For example, it can be added at the beginning with the monomers, during monomer esterification or ester-interchange, at the end of monomer esterification or ester-interchange, or early in the polycondensation step.

In the case that the production of DEG needs to be controlled during the reaction, a range of catalysts can be used. These include the use of lithium acetate buffers as described in U.S. Patent 3,749,697 and a range of sodium and potassium acetate buffers as described in JP 83-62626, RO 88-135207, and JP 2001-105902. Typically, 100-600 ppm of sodium or potassium acetate was used during the polymerization to minimize the degree of DEG formation and incorporation into the polymer.

### Formation of Articles

Film samples are indicative of the improved gas barrier properties obtainable from the invention. The nanocomposite is prepared by in situ polymerization of the base polymer in the presence of a sepiolite-type clay, as described above. The nanocomposite can then be used to make film, sheet, or containers by any method known to one of ordinary skill in the art. Film, sheet, and containers comprising the nanocomposite exhibit increased tear strength; increased tensile modulus; decreased permeability to water vapor, oxygen, and carbon dioxide; and retain a high level of toughness and clarity.

The polyester nanocomposite can be used alone or as a component of a polymer blend. Additives commonly used in the art can be incorporated, such as, but not limited to, antioxidants, antistatic agents, heat stabilizers, UV stabilizers, slip agents, and antiblock agents.

Articles of the present invention may be in the form of or comprise, but are not limited to, film, sheet, container, membrane, laminate, pellet, coating, or foam. Articles may be prepared by any means known in the art, such as, but not limited to, methods of injection molding, (co)extrusion, blow molding, thermoforming, solution casting, lamination, and film blowing. In a particularly preferred embodiment, the article is an injection stretch blow molded bottle.

The preferred articles of the present invention include packaging for food, personal care (health and hygiene) items, and cosmetics. By "packaging" is meant either an entire package or a component of a package. Examples of packaging components include, but are not limited, to packaging film, liners, shrink bags, shrink wrap, trays, tray/container assemblies, replaceable and nonreplaceable caps, lids, and drink bottle necks.

The package may be in any form appropriate for the particular application, such as a can, box, bottle, jar, bag, cosmetics package, or closed-ended tube. The packaging may be fashioned by any means known in the art, such as, but not limited to, extrusion, coextrusion, thermoforming, injection molding, lamination, or blow molding.

Some specific examples of packaging for personal care items and cosmetics include, but are not limited to, bottles, jars, and caps for food and for prescription and non-prescription capsules and pills; solutions, creams, lotions, powders, shampoos, conditioners, deodorants, antiperspirants, and suspensions for eye, ear, nose, throat, vaginal, urinary tract, rectal, skin, and hair contact; and lip product.

### EXAMPLES

The present invention is further defined in the following Examples. It should be understood that these Examples, while indicating preferred embodiments of the invention, are given by way of illustration only.

The meaning of abbreviations is as follows: "min" means minute(s), "m" means meter(s), "cm" means centimeter(s), "mm" means millimeter(s), "µm" means micrometer(s), "kg" means kilogram(s), "g" means gram(s), "lb" means pound(s), "M" means molar, "MPa" means megapascals, "wt%" means weight percent(age), "DMT" means dimethyl terephthalate, "NMR" means nuclear magnetic resonance, "SEC" means size exclusion chromatography, "Mₙ" means number average molecular weight, "RPM" means revolutions per minute, "psi" means pound per square inch, "ksi" means thousands of pounds per square inch, "MD" means machine direction, "TD" means transverse direction, and "ND" means not determined.

### Materials

Dimethyl terephthalate (CAS # 120-61-6, 99%) was purchased from INVISTA (Wichita, Kansas). Ethylene glycol (CAS #107-21-1) was purchased from Univar USA (Kirkland, Washington). Antimony oxide (CAS 1309-64-4, 99%), and manganese acetate (CAS # 6156-78-1, 99%) were purchased from Aldrich Chemical Company (Milwaukee, Wisconsin). PANGEL® B20 sepiolite was purchased from EM Sullivan Associates. The control PET sample used was CRYSTAR® 3934 (E. I. du Pont de Nemours & Co., Inc., Wilmington, Delaware). The two EASTAR® PETG grades were purchased from the Eastman Chemical Company (Kingsport, Tennessee).

### Analytical Methods

A size exclusion chromatography system comprised of a Model Alliance 2690^{™} from Waters Corporation (Milford, MA), with a Waters 410^{™} refractive index detector (DRI) and Viscotek Corporation (Houston, TX) Model T-60A^{™} dual detector module incorporating static right angle light scattering and differential capillary viscometer detectors was used for molecular weight characterization. The mobile phase was 1,1,1,3,3,3-hexafluoro-2-propanol (HFIP) with 0.01 M sodium trifluoroacetate. The dn/dc was measured for the polymers and it was assumed that all of the sample was completely eluted during the measurement. The percentage of diethylene glycol (DEG) was determined using ¹H NMR spectroscopy.

The tensile properties of the nanocomposite film were determined according to ASTM procedure D882. The water vapor transmission rate was performed using a MOCON® PERMATRAN-W® (MOCON®, Inc., Minneapolis, Minnesota) at 25°C, 100% relative humidity, according to ASTM procedure D6701. Yellowness was evaluated by eye or measured according to ASTM D1003 at 50% relative humidity, as indicated.

### EXAMPLE 1

### Polyester/Sepiolite Nanocomposite Preparation

A stainless steel autoclave was charged with DMT (10.1 Ibs, 4.59 kg), ethylene glycol (6.7 Ibs, 3.0 kg), antimony trioxide (2.80 g), manganese acetate (3.60 g), sodium acetate (1.30 g), and PANEL@ B20 sepiolite (140.0 g). The reaction vessel was purged with 60 psi of nitrogen three times. The vessel was heated to 240°C with a low flow nitrogen sweep of the vessel. While the vessel was heating to 240°C, the reaction was agitated at 25 RPM. After the vessel reached 240°C, the reaction temperature was maintained for 10 min. The reaction was then heated to 275°C and a 90 minute vacuum reduction cycle was begun. Upon completion of the vacuum reduction cycle, a full vacuum (0.1 torr) was applied to the reaction and the reaction was maintained at 275°C for 120 min. The reaction was pressurized with nitrogen and the polymer was extruded as a strand, cooled in a water trough, and chopped into pellet form. The polymer molecular weight was determined using SEC. Mₙ = 24600, %DEG = 2.89%. This material is referred to below as "PET - Example 1".

### EXAMPLE 2.

### Preparation and Properties of Film Containing 3 wt% Sepiolite

A CRYSTAR® polyester polymer (unfilled) as a control and the polyester/sepiolite nanocomposite (3 wt% sepiolite) prepared in Example 1 were dried overnight at 120°C under vacuum. A 30 mm twin screw extruder was fitted with a 10" (25.4 cm) film die and feeder with a nitrogen blanket. The barrel was heated to a temperature of 255°C and the die was heated to 265°C. The film was extruded and cooled on a cooled casting drum. A filter screen was not used during extrusion. Clarity and color were evaluated by eye. Tensile modulus and WVTR were measured as described above. Results are presented in Table 1.

**Table 1**

| Film Thickness, mil (µm) | Sepiolite (wt%) | Clarity | Color | Tensile Modulus MD/TD (ksi) | Equilibrium WVTR (g/m²-day) |
|---|---|---|---|---|---|
| 2 (51) | 0 | Clear | None | 310/306 | 36 |
| 2 (51) | 3 | Clear | Slight Yellow | 416/366 | 20 |
| 4 (102) | 0 | Clear | None | 313/321 | 12 |
| 4 (102) | 3 | Clear | Slight Yellow | 395/348 | 6 |
| 6 (152) | 0 | Clear | None | 278/351 | ND |
| 6 (152) | 3 | Clear | Slight Yellow | 397/353 | |

### EXAMPLE 3.

### Preparation of PET and Copolyester Sheet containing Sepiolite

The control CRYSTAR® polyester polymer (unfilled), the polyester/sepiolite nanocomposite (3 wt% sepiolite) prepared in Example 1, and copolyesters EASTAR® 21446 and EASTAR® 6763 were dried overnight at 120°C under vacuum. A 30 mm twin screw extruder was fitted with a 10" (25.4 cm) film die and feeder with a nitrogen blanket. The barrel was heated to a temperature of 255°C and the die was heated to 265°C. The feeds for Samples 3A, 3B, 3C, and 3D were the PET nanocomposite composition from Example 1 ("PET-Example 1"); a 1:1 by weight pellet blend of PET-Example 1 and EASTAR® 21446; a 1:1 by weight pellet blend of PET-Example 1 and EASTAR® 6763; and the CRYSTAR® 3934 control. Sheet of 35 mil (889 µm) thickness was extruded and cooled on a cooled casting drum. A filter screen was not used during extrusion. Yellowness was measured according to ASTM D1003 and is presented in Table 2. Tensile properties are presented in Table 3.

**Table 2**

| Example | Resin | Sepiolite (wt%) | Yellowness (ASTM D1003) |
|---|---|---|---|
| 3A | PET - Example 1 | 3.0 | 14.07 |
| 3B | EASTAR® 21446 | 1.5 | 6.72 |
| 3C | EASTAR® 6763 | 1.5 | 7.58 |
| 3D | CRYSTAR® 3934 | 0 | 2.98 |

**Table 3**

| | CRYSTAR® 3934 | EASTAR® 21446 | EASTAR® 6763 | PET - Example 1 |
|---|---|---|---|---|
| Sepiolite (wt%) | 0 | 1.5 | 1.5 | 3.0 |
| Yield Stress, MPa (psi) | 54.5 (7900) | 52.7(7650) | 52.0(7540) | 55.8 (8100) |
| Yield Strain (%) | 5.0 | 4.0 | 3.8 | 3.8 |
| Elongation (%) | >200 | 315 | 325 | 206 |
| Tensile Modulus, MPa (ksi) | 1689(245) | 2100(305) | 2100(304) | 2620(380) |

## Claims

1. A method for reducing gas permeability of shaped thermoplastic polymeric articles wherein the article is formed from at least one polymer or polymeric blend selected from polyester homopolymers, polyester copolymers, and polymeric blends comprising at least one such homopolymer or copolymer and wherein the method comprises the steps of:
(a) preparing a nanocomposite by mixing an amount of an exfoliated sepiolite-type clay effective to reduce gas permeability with at least one polyester precursor selected from
(i) at least one diacid or diester and at least one diol;
(ii) at least one polymerizable polyester monomer;
(iii) at least one linear polyester oligomer, and
(iv) at least one macrocyclic polyester oligomer,
(b) polymerizing the at least one polyester precursor; and
(c) forming the shaped article.

2. The method of Claim 1 wherein the polyester precursor is polymerized in the presence of solvent.

3. The method of Claim 1 wherein the polymerization is carried out in the presence of 100-600 ppm of lithium, sodium or potassium acetate.

4. The method of Claim 1 wherein the polyester homopolymer or copolymer is selected from poly(ethylene terephthalate), poly(1,3- propylene terephthalate), poly(1,4-butylene terephthalate), a thermoplastic elastomeric polyester having poly(1,4-butylene terephthalate) and poly(tetramethylene ether)glycol blocks, poly(1,4-cyclohexyldimethylene terephthalate), polylactic acid.

5. The method of Claim 1 wherein the polymer is bottle grade poly(ethylene terephthalate) that has been modified with from 2 mole % up to 5 mole % of isophthalate units, and the exfoliated sepiolite-type clay is present at a concentration of from 0.01 % by wt. to 6.0% by wt. based on the weight of the modified polyethylene terephthalate.

6. The method of Claim 1 wherein forming is selected from (co)extrusion, injection molding, blow molding, injection stretch blow molding, extrusion blow molding, lamination, thermoforming, and film blowing.

7. The method of Claim 1 wherein the shaped article is selected from a film, sheet, container, membrane, laminate, pellet, coating, foam, package or packaging component, bottle, box, jar, can, bag, close-ended tube, cosmetics package, liner, lid, replaceable or disposable container cap, film, shrink wrap, shrink bag, tray, tray/container assembly, and drink bottle neck.

8. A nanocomposite composition comprising at least one polyester and exfoliated sepiolite-type clay, obtainable by the method comprising the steps of:
(a) preparing a nanocomposite by mixing an amount of an exfoliated sepiolite-type clay effective to reduce gas permeability with at least one polyester precursor selected from
(i) at least one diacid or diester and at least one diol;
(ii) at least one polymerizable polyester monomer;
(iii) at least one linear polyester oligomer, and
(iv) at least one macrocyclic polyester oligomer,
and (b) polymerizing the at least one polyester precursor.

9. The composition of Claim 8 wherein the at least one diacid or diester is selected from the group consisting of terephthalic acid, isophthalic acid, naphthalene dicarboxylic acids, cyclohexane dicarboxylic acids, succinic acid, glutaric acid, adipic acid, sebacic acid, 1,12-dodecane dioic acid, fumaric acid, maleic acid, and the dialkyl esters thereof; the at least one diol is selected from the group consisting of ethylene glycol, 1,3-propylene glycol, 1,2-propylene glycol, 2,2-diethyl-1,3-propane diol, 2,2-dimethyl-1,3-propane diol, 2-ethyl-2-butyl-1,3-propane diol, 2-ethyl-2-isobutyl-1,3-propane diol, 1,3-butane diol, 1,4-butane diol, 1,5-pentane diol, 1,6-hexane diol, 2,2,4-trimethyl-1,6-hexane diol, 1,2-cyclohexane dimethanol. 1,3-cyclohexane dimethanol, 1,4-cyclohexane dimethanol, 2,2,4,4-tetramethyl-1,3-cyclobutane diol, isosorbide, naphthalene glycols, diethylene glycol, triethylene glycol, resorcinol, hydroquinone, and longer chain diols and polyols which are the reaction products of diols or polyols with alkylene oxides; the at least one polymerizable monomer is selected from the group consisting of hydroxyacids, lactide, bis(2-hydroxyethyl) terephthalate, bis(4-hydroxybutyl) terephthalate, bis(2-hydroxyethyl)naphthalenedioate, bis(2-hydroxyethyl)isophthalate, bis[2-(2-hydroxyethoxy)ethyl]terephthalate, bis[2-(2-hydroxyethoxy)ethyl]isophthalate, bis[(4-hydroxymethylcyclohexyl)methyl]terephthalate, and bis[(4-hydroxymethylcyclohexyl)methyl]isophthalate, mono(2-hydroxyethyl)terephthalate, and bis(2-hydroxyethyl)sulfoisophthalate; and the at least one macrocyclic polyester oligomer is a macrocyclic polyester oligomer of: 1,4-butylene terephthalate; 1,3-propylene terephthalate; 1,4-cyclohexylenedimethylene terephthalate; ethylene terephthalate; 1,2-ethylene 2,6-naphthalenedicarboxylate; the cyclic ester dimer of terephthalic acid and diethylene glycol; or a macrocyclic co-oligoester of two or more of these.

10. The composition of Claim 8 wherein the exfoliated sepiolite-type clay is present at 0.1 to 20 weight percent, based on the weight of polyester plus exfoliated sepiolite-type clay.

11. The composition of Claim 8 wherein said polyester is poly(ethylene terephthalate), poly(1,3-propylene terephthalate), poly(1,4-butylene terephthalate), or poly(1,4-cylohexyldimethylene terephthalate).

12. A package or packaging component comprising a nanocomposite according to Claim 8.

13. The package or packaging component of Claim 12, wherein said package or packaging component is a bottle, box, jar, can, bag, close- ended tube, cosmetics package, liner, lid, replaceable or disposable container cap, film, shrink wrap, shrink bag, tray, tray/container assembly, or drink bottle neck.

14. The bottle of Claim 13 wherein said bottle is formed by injection stretch blow molding and is formed from a polyester nanocomposite wherein the polyester is bottle grade polyethylene terephthalate that has been modified with from 2 mole % up to 5 mole % of isophthalate units, and the exfoliated sepiolite-type clay is present at a concentration of from 0.01% by wt. to 6.0% by wt. based on the weight of the modified polyethylene terephthalate.

## Patentansprüche

1. Verfahren zur Verminderung der Gasdurchlässigkeit von thermoplastischen Polymerformstücken, wobei das Stück aus mindestens einem Polymer oder Polymergemisch geformt wird, das unter Polyester-Homopolymeren, Polyester-Copolymeren und Polymergemischen ausgewählt ist, die mindestens ein derartiges Homopolymer oder Copolymer aufweisen, und wobei das Verfahren die folgenden Schritte aufweist:
(a) Herstellen eines Nanokomposits durch Mischen einer Menge abgeblätterten sepiolithartigen Tons, die eine Verminderung der Gasdurchlässigkeit bewirkt, mit mindestens einem Polyester-Vorläufer, der unter den folgenden ausgewählt ist:
(i) mindestens einer zweibasigen Säure oder einem Diester und mindestens einem Diol;
(ii) mindestens einem polymerisierbaren Polyester-Monomer;
(iii) mindestens einem linearen Polyester-Oligomer; und
(iv) mindestens einem makrocyclischen Polyester-Oligomer,
(b) Polymerisieren des mindestens einen Polymer-Vorläufers; und
(c) Formen des Formstücks.

2. Verfahren nach Anspruch 1, wobei der Polymer-Vorläufer in Gegenwart von Lösungsmittel polymerisiert wird.

3. Verfahren nach Anspruch 1, wobei die Polymerisation in Gegenwart von 100-600 ppm Lithium-, Natrium- oder Kaliumacetat ausgeführt wird.

4. Verfahren nach Anspruch 1, wobei das Polyester-Homopolymer oder -Copolymer unter Poly(ethylenterephthalat), Poly(1,3-propylenterephthalat), Poly(1,4-butylenterephthalat), einem thermoplastischen elastomeren Polyester mit Poly(1,4-butylenterephthalat)- und Poly(tetramethylenether)glycol-Blöcken, Poly(1,4-cyclohexyldimethylenterephthalat), Polymilchsäure ausgewählt ist.

5. Verfahren nach Anspruch 1, wobei das Polymer Poly(ethylenterephthalat) in Flaschenqualität ist, das mit 2 Mol-% bis 5 Mol-% Isophthalat-Einheiten modifiziert worden ist, und wobei der abgeblätterte sepiolithartige Ton in einer Konzentration von 0,01 Gew.-% bis 6 Gew.-% anwesend ist, bezogen auf das Gewicht des modifizierten Poly(ethylenterephthalats).

6. Verfahren nach Anspruch 1, wobei die Formgebung unter (Co-)Extrusion, Spritzgießen, Blasformen, Spritzstreckblasen, Extrusionsblasen, Laminieren, Thermoformen und Folienblasen ausgewählt ist.

7. Verfahren nach Anspruch 1, wobei das Formstück unter einem Film, einer Folie, einem Behälter, einer Membran, einem Laminat, Pellet, einer Überzugsschicht, einem Schaumstoff, einer Verpackung oder Verpackungskomponente, einer Flasche, Schachtel, einem Gefäß, einer Dose, einem Beutel, einem Schlauch mit geschlossenem Ende, einer Kosmetikverpackung, einer Auskleidung, einem Deckel, einer auswechselbaren oder wegwerfbaren Behälterkappe, einem Film, einer Schrunpfverpackung, einem Schrumpfbeutel, einer Schale, einer Schale/Bchälter-Einheit und einem Trinkflaschenhals ausgewählt ist.

8. Nanokomposit-Zusammensetzung, die mindestens einen Polyester und abgeblätterten sepiolithartigen Ton aufweist, herstellbar nach dem Verfahren mit den folgenden Schritten:
(a) Herstellen eines Nanokomposits durch Mischen einer Menge abgeblätterten sepiolithartigen Tons, die eine Verminderung der Gasdurchlässigkeit bewirkt, mit mindestens einem Polyester-Vorläufer, der unter den folgenden ausgewählt ist:
(i) mindestens einer zweibasigen Säure oder einem Diester und mindestens einem Diol;
(ii) mindestens einem polymerisierbaren Polyester-Monomer;
(iii) mindestens einem linearen Polyester-Oligomer; und
(iv) mindestens einem makrocyclischen Polyester-Oligomer, und
(b) Polymerisieren des mindestens einen Polymer-Vorläufers.

9. Zusammensetzung nach Anspruch 8, wobei die mindestens eine zweibasige Säure oder der mindestens eine Diester aus der Gruppe ausgewählt ist, die aus Terephthalsäure, Isophthalsäure, Naphthalindicarbonsäuren, Cyclohexandicarbonsäuren, Succinsäure, Glutarsäure, Adipinsäure, Sebacinsäure, 1,12-Dodecan-hexadecen-1,16-dicarbonsäure, Fumarsäure, Malinsäure und deren Dialkylestem besteht; wobei das mindestens eine Diol aus der Gruppe ausgewählt ist, die aus Ethylenglycol, 1,3-Propylenglycol, 1,2-Propylenglycol, 2,2-Diethyl-1,3-propandiol, 2,2-Dimethyl-1,3-propandiol, 2-Ethyl-2-butyl-1,3-propandiol, 2-Ethyl-2-isobutyl-1,3-propandiol, 1,3-Butandiol, 1,4-Butandiol, 1,5-Pentandiol, 1,6-Hexandiol, 2,2,4-Trimethyl-1,6-hexandiol, 1,2-Cyclohexandimethanol, 1,3-Cyclohexandimethanol, 1,4-Cyclohexandimethanol, 2,2,4,4-Tetramethyl-1,3-cyclobutandiol, Isosorbid, Naphthalinglycolen, Diethylenglycol, Triethylenglycol, Resorcinol, Hydrochinon und längerkettigen Diolen und Polyolen besteht, die Reaktionsprodukte von Diolen oder Polyolen mit Alkylenoxiden sind; wobei das mindestens eine polymerisierbare Monomer aus der Gruppe ausgewählt ist, die aus Hydroxylsäuren, Lactid, Bis(2-hydroxyethyl)terephthalat, Bis(4-hydroxybutyl)terephthalat, Bis(2-hydroxyethyl)naphthalindioat, Bis(2-hydroxyethyl)isophthalat, Bis[2-(2-hydroxyethoxy)ethyl]terephthalat, Bis[2-(2-hydroxyethoxy)ethyl]isophthalat, Bis[(4-hydroxymethylcyclohexyl)methyl]terephthalat und Bis[(4-hydroxymethylcyclohexyl)methyl]isophthalat, Mono(2-hydroxyethyl)terephthalat und Bis(2-hydroxyethyl)sulfoisophthalat besteht; und wobei das mindestens eine makrocyclische Polyester-Oligomer ein makrocyclisches Polyester-Oligomer ist, das aus den folgenden Komponenten besteht: 1,4-Butylentcrephthalat; 1,3-Propylenterephthalat; 1,4-Cyclohexylendimethylenterephthalat; Ethylenterephthalat; 1,2-Ethylen-2,6-naphthalindicarboxylat; dem cyclischen Esterdimer von Terephthalsäure und Diethylenglycol oder einem makrocyclischen Co-Oligoester von zwei oder mehreren dieser Komponenten.

10. Zusammensetzung nach Anspruch 8, wobei der abgeblätterte sepiolithartige Ton in einem Anteil von 0,1 bis 20 Gew.-% anwesend ist, bezogen auf das Gewicht des Polyesters plus des abgeblätterten sepiolithartigen Tons.

11. Zusammensetzung nach Anspruch 8, wobei der Polyester Poly(ethylenterephthalat), Poly(1,3-propylenterphthalat), Poly(1,4-butylenterephthalat) oder Poly(1,4-cyclohexyldimethylenterephthalat) ist.

12. Verpackung oder Verpackungskomponente, die ein Nanokomposit nach Anspruch 8 aufweist.

13. Verpackung oder Verpackungskomponente nach Anspruch 12, wobei die Verpackung oder Verpackungskomponente eine Flasche, Schachtel, ein Gefäß, eine Dose, ein Beutel, ein Schlauch mit geschlossenem Ende, eine Kosmetikverpackung, eine Auskleidung, ein Deckel, eine auswechselbare oder wegwerfbare Behälterkappe, ein Film, eine Schrumpfverpackung, ein Schrumpfbcutel, eine Schale, eine Schale/Behälter-Einheit oder ein Trinkflaschenhals ist.

14. Flasche nach Anspruch 13, wobei die Flasche durch Spritzstreckblasen geformt wird und aus einem Polyester-Nanokomposit geformt wird, wobei der Polyester Polyethylenterephthalat in Flaschenqualität ist, das mit 2 Mol-% bis 5 Mol-% Isophthalat-Einlieiten modifiziert worden ist, und wobei der abgeblätterte sepiolithartige Ton in einer Konzentration von 0,01 Gew.-% bis 6,0 Gew.-% anwesend ist, bezogen auf das Gewicht des modifizierten Polyethylenterephthalats.

## Revendications

1. Procédé de réduction de la perméabilité aux gaz d'articles polymères thermoplastiques mis en forme dans lequel l'article est formé à partir d'au moins un polymère ou mélange de polymères choisis parmi les homopolymères de polyester, les copolymères de polyester, et les mélanges polymères comprenant au moins un de ces tels homopolymères ou copolymères et dans lequel le procédé comprend les étapes de:
(a) préparation d'un nanocomposite par mélange d'une quantité d'une argile de type sépiolite exfoliée efficace pour réduire la perméabilité aux gaz avec au moins un précurseur de polyester choisi parmi
(i) au moins un diacide ou diestcr et au moins un diol;
(ii) au moins un monomère de polyester polymérisable;
(iii) au moins un oligomère de polyester linéaire, et
(iv) au moins un oligomère de polyester macrocyclique,
(b) la polymérisation du au moins un précurseur de polyester; et
(c) la formation de l'article mis en forme.

2. Procédé selon la revendication 1, dans lequel le précurseur de polyester est polymérisé en la présence de solvant.

3. Procédé selon la revendication 1, dans lequel la polymérisation est conduite en la présence de 100 à 600 ppm d'acétate de lithium, de sodium ou de potassium.

4. Procédé selon la revendication 1, dans lequel l'homopolymère ou le copolymère de polyester est choisi parmi le poly(téréphlalale d'éthylène), le poly(téréphtalate de 1,3-propylène), le poly(téréphtalate de 1,4-butyléne), un polyester élastomère thermoplastique ayant des séquences de poly(téréphtalate de 1,4-butylène) et des blocs de poly(éther de tétraméthylène)glycol, de poly(téréphtalate de 1,4-cyclohexyldiméthylène), et de poly(acide lactique).

5. Procédé selon la revendication 1, dans lequel le polymère est du poly(téréphtalate d'éthylène) de qualité pour bouteille qui a été modifié avec de 2 % en mole jusqu'à 5 % en mole de motifs isophtalates, et l'argile de type sépiolite exfoliée est présente à une concentration de 0,01 % en poids jusqu'à 6,0 % en poids, basée sur le poids du poly(téréphtalate d'éthylène) modifié.

6. Procédé selon la revendication 1, dans lequel la mise en forme est choisie parmi: la (co)extrusion, le moulage par injection, le moulage par soufflage, le moulage par injection-étirage-soufflage, le moulage par extrusion-soufflage, la stratification, le thermoformage, et le soufflage de film.

7. Procédé selon 1a revendication 1, dans lequel l'article mis en forme est choisi parmi un film, une feuille, un récipient, une membrane, un stratifié, une pastille, un revêtement, une mousse, un conditionnement ou un composant pour conditionnement, une bouteille, une boîte, un flacon, une canette, un sac, un tube à extrémités fermées, un conditionnement pour produits cosmétiques, une doublure, un couvercle, un bouchon remplaçable ou jetable pour récipient, un film, une enveloppe rétrécissable, un sac rétrécissable, un plateau, un assemblage de type plateau/récipient, et un goulot de bouteille pour boisson.

8. Composition nanocomposite comprenant au moins un polyester et une argile de type sépiolite exfoliée, pouvant être obtenue par le procédé comprenant les étapes de:
(a) préparation d'un nanocomposite par le mélange d'une quantité d'une argile de type sépiolite exfoliée efficace pour réduire la perméabilité aux gaz avec au moins un précurseur de polyester choisi parmi
(i) au moins un diacide ou diester et au moins un diol;
(ii) au moins un monomère de polyester polymérisable;
(iii) au moins un oligomère de polyester linéaire, et
(iv) au moins un oligomère de polyester macrocyclique, et
(b) la polymérisation du au moins un précurseur de polyester.

9. Composition selon la revendication 8, dans laquelle le au moins un diacide ou diester est choisi parmi le groupe constitué de l'acide téréphtalique, de l'acide isophtalique, des acides naphtalène dicarboxyliques, des acides cyclohexane dicarboxyliques, de l'acide succinique, de l'acide glutarique, de l'acide adipique, de l'acide sébacique, de l'acide 1,12-dodécane dioïque, de l'acide fumarique, de l'acide maléique, et les esters dialkyliques de ceux-ci; le au moins un diol est choisi parmi le groupe constitué de l'éthylène glycol, du 1,3-propylène glycol, du 1,2-propylène glycol, du 2,2-diéthyl-1,3-propane diol, du 2,2-diméthyl-1,3-propane diol, du 2-éthyl-2-butyl-1,3-propane diol, du 2-éthyl-2-isobutyl-1,3-propane diol, du 1,3-butane diol, du 1,4-butane diol, du 1,5-pentane diol, du 1,6-hexane diol, du 2,2,4-triméthyl-1,6-hexane diol, du 1,2-cyclohexane diméthanol, du 1,3-cyclohexane diméthanol, du 1,4-cyclohexane diméthanol, du 2,2,4,4-tétraméthyl-1,3-cyclobutane diol, de l'isosorbide, des naphtalène glycols, du diéthylène glycol, du triéthylène glycol, du résorcinol, de l'hydroquinone, et des diols à chaîne plus longue et des polyols qui sont les produits réactionnels des diols ou des polyols avec des oxydes d'alcylène; le au moins un monomère polymérisable est choisi parmi le groupe constitué des hydroxyacidcs, du lactide, du téréphtalate de bis(2-hydroxyéthyle), du téréphtalate de bis(4-hydroxybutyle), du naphtalènedioate de bis(2-hydroxyéthyle), de l'isophtalate de bis(2-hydroxyéthyle), du téréphtalate de bis[2-(2-hydroxyéthoxy)éthyle], de l'isophtalate de bis[2-(2-hydroxyéthoxy)éthyle], du téréphtalate de bis[(4-hydroxyméthylcyclohexyl)méthyle], et de l'isophtalate de bis[(4-hydroxyméthylcyclohexyl)méthyle], du téréphtalate de mono(2-hydroxyéthyle), et du sulfoisophtalate de bis(2-hydroxyéthyle); et le au moins un oligomère de polyester macrocyclique est un oligomère de polyester macrocyclique de: téréphtalate de 1,4-butylène; téréphtalate de 1,3-propylène; téréphtalate de 1,4-cyclohexylènediméthylène; téréphtalate d'éthylène; 2,6-naphtalènedicarboxylatc de 1,2-éthylène; du dimère d'ester cyclique d'acide téréphtalique et de diéthylène glycol; ou d'un co-oligoester macrocyclique de deux ou plusieurs d'entre eux.

10. Composition selon la revendication 8, dans laquelle l'argile de type sépiolite exfoliée est présente à 0,1 à 20 pour-cent en poids, basé(s) sur le poids du polyester plus de l'argile de type sépiolite exfoliée.

11. Composition selon la revendication 8, dans laquelle ledit polyester est le poly(téréphtalate d'éthylène), le poly(téréphtalate de 1,3-propylène), le poly(téréphtalate de 1,4-butylène), ou le poly(téréphtalate de 1,4-cyclohexyldiméthylène).

12. Conditionnement ou composant pour conditionnement comprenant un nanocomposite selon la revendication 8.

13. Conditionnement ou composant pour conditionnement selon la revendication 12, dans lequel ledit conditionnement ou composant pour conditionnement est une bouteille, une boîte, un flacon, une canette, un sac, un tube à extrémités fermées, un conditionnement pour produits cosmétiques, une doublure, un couvercle, un bouchon remplaçable ou jetable pour récipient, un film, une enveloppe rétrécissable, un sac rétrécissable, un plateau, un assemblage de type plateau/récipient, et un goulot de bouteille pour boisson.

14. Bouteille selon la revendication 13, dans laquelle ladite bouteille est formée par moulage par injection-étirage-soufflage et est formée à partir d'un nanocomposite de polyester dans lequel le polyester est un poly(téréphtalate d'éthylène) de qualité pour bouteille qui a été modifié avec de 2 % en mole jusqu'à 5 % en mole de motifs isophtalates, et l'argile de type sépiolite exfoliée est présente à une concentration de 0,01 % en poids jusqu'à 6,0 % en poids basée sur le poids du poly(téréphtalate d'éthylène) modifié.
